# EUROPÄISCHE PATENTSCHRIFT

(11) **EP 0 684 166 B1**
(45) Veröffentlichungstag und Bekanntmachung des Hinweises auf die Patenterteilung: **10.12.1997**
(21) Anmeldenummer: 95107015.0
(22) Anmeldetag: 09.05.1995
(51) Int. Cl.: B60R 21/20

(54) **Innenverkleidungsteil**
Inner liner panel
Elément de garniture intérieure

(30) Priorität: 25.05.1994 DE 4418172
(43) Veröffentlichungstag der Anmeldung: 29.11.1995
(73) Patentinhaber: Becker Group Europe GmbH, 42285 Wuppertal (DE)
(72) Erfinder: Berg, Matthias, D-47906 Kempen (DE); Harnisch, Hartmut, D-47929 Grefrath (DE); Madge, Steven, D-47802 Krefeld (DE); Reinhardt, Werner, D-65428 Rüsselsheim (DE)
(74) Vertreter: Cohausz & Florack

(56) Entgegenhaltungen:
- WO-A-92/09458
- DE-A- 4 418 582
- GB-A- 2 276 354

## Beschreibung

Die Erfindung betrifft ein Innenverkleidungsteil, insbesondere Instrumententafel für Kraftfahrzeuge, das aus einem mit einer schaumstoffbeschichteten Folie kaschierten Träger besteht, in dem eine Klappe für den Durchtritt eines Airbags bei dessen Auslösung versehen ist, die integral mit dem Träger ist und von der Folie überdeckt ist, die entlang der Ränder der Klappe eine eingeprägte Rille aufweist.

Eine derartige Vorrichtung ist bereits in der WO-A-9 209 458 beschrieben.

Bislang hat man im Träger der Instrumententafel eine Ausnehmung für den Durchtritt des Airbag bei einem Zusammenstoß zum Schutze des Beifahrers in einem Kraftfahrzeug vorgesehen. Diese Ausnehmung wurde durch eine Klappe verschlossen, die über ein Scharnier am Träger der Instrumententafel am Rand der Ausnehmung befestigt war. Die Klappe wurde durch die Kaschierung der Instrumententafel mit einer schaumstoffbeschichteten Kunststoffolie überdeckt. Diese bekannte Lösung hatte den Nachteil, daß die Klappe als zusätzliches Teil gefertigt und montiert werden mußte. Das war arbeitsaufwendig und kostenintensiv.

Um diesen Nachteil zu beheben, ist die Klappe auch schon als integraler Bestandteil des Trägers der Instrumententafel gefertigt worden. Allerdings gelang dies bisher nur bei einer Ausführung, die mit einer verhältnismäßig dicken Schaumstoffschicht unter der Folie versehen war, so daß sich die Folienkaschierung nicht in die Fuge zwischen dem Instrumententafelträger und der Klappe hineinzieht, wie es bei dünnen Folienkaschierungen geschieht, wenn diese mittels Vakuums an den Träger gezogen wird.

Der Erfindung liegt nun die Aufgabe zugrunde, eine Ausführung für ein Innenverkleidungsteil, wie einer Instrumententafel oder einer Seitentürverkleidung, eines Kraftfahrzeuges zu schaffen, bei der die Klappe für die Ausnehmung zum Durchtritt des Airbag im Gefahrenfall einteilig mit dem Träger des Innenverkleidungsteils ist, die aber auch eine dünne Folie erlaubt, die mittels Vakuums auf den Träger kaschiert wird. Dabei darf sich die dünne Folie nicht in die Fuge zwischen der Klappe und dem Träger hineinziehen, sondern muß die Fuge glatt überdecken.

Zur Lösung dieser Aufgabe wird bei dem gattungsgemäßen Teil erfindungsgemäß vorgeschlagen, daß die die Klappe auf einem Teil ihres Umfangs vom Träger trennende Fuge schmaler ist als 0,8 mm und daß die Folie im Bereich der Fuge geschwächt ist.

Bevorzugte Ausgestaltungen sind in den Unteransprüchen gekennzeichnet. Sie zielen auf eine möglichst schmale, weniger als 0,5 mm, besser noch weniger als 0,3 mm breite Fuge. Wenn die Schnittebene der Fuge unter einem von 90° abweichenden Winkel zur Ebene des Trägers liegt, kann der Klappenrand sogar fugenlos am Trägerrand liegen. Am besten ist dabei ein Winkel im Bereich von 30 bis 60°, vorzugsweise etwa 45°.

Der Träger des Innenverkleidungsteils kann aus jedem beliebigen Material, vorzugsweise aber aus formgepreßtem defibrierten Faserstoff bestehen.

Die schaumstoffbeschichtete Folie, die mittels Vakuums auf den Träger kaschiert wird, kann bevorzugt 2 bis 3 mm Gesamtstärke haben.

Sicherheitshalber sollte gemäß einer bevorzugten Ausgestaltung der Erfindung der Steg zwischen der Klappe und dem Träger durch einen aufgeklebten Streifen aus flexiblem reißfestem Material, insbesondere ein Gewebe, verstärkt sein. Dieser Streifen verhindert, daß beim Auslösen des Airbag die Klappe vom Träger abgebrochen und dem Beifahrer entgegengeschleudert wird und ihn verletzt.

Um einen Durchtritt und Austritt das Airbag zu erleichtern, sollte die Folie entlang der Fuge mit einer dickenreduzierten eingeprägten Rille versehen sein, die ein Aufreißen der Folie beim Öffnen der Klappe erleichtert.

In der Zeichnung ist ein Ausführungsbeispiel der Erfindung dargestellt.

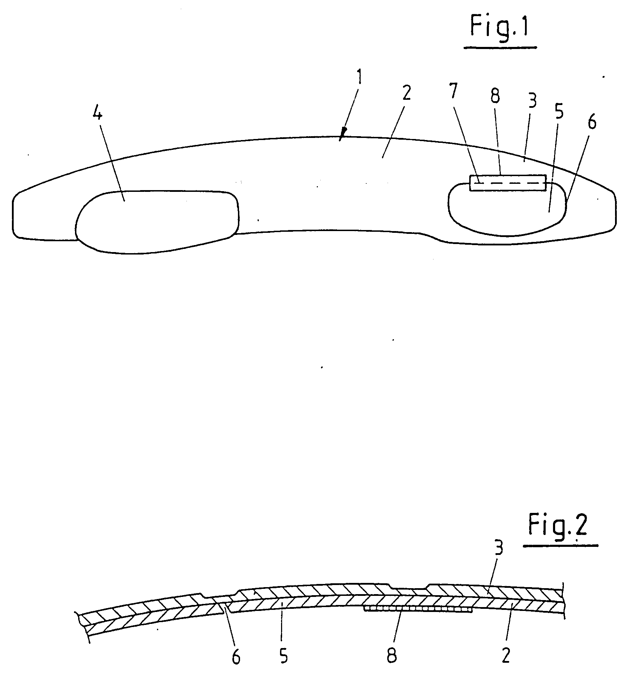

- Fig. 1: zeigt eine Instrumententafel eines Kraftfahrzeuges in Draufsicht und
- Fig. 2: im Teilquerschnitt.

Die Instrumententafel 1 besteht wie üblich aus einem Träger 2, der mit einer schaumstoffbeschichteten Folie 3 beschichtet ist. Auf der Fahrerseite ist die Auswölbung 4 für die Unterbringung der Instrumente erkennbar. Auf der Beifahrerseite ist eine mit dem Träger 2 integrale Klappe 5 angeordnet, die auf einem Teil ihres Umfanges durch eine möglichst schmale Fuge 6 vom Träger 2 getrennt ist. Entlang des Steges 7 ist die Klappe 5 mit dem Träger 2 einstückig verbunden. Entlang des Steges 7 ist ein Streifen 8 zur Verstärkung von unten aufgeklebt.

Bei dem in der Zeichnung dargestellten Ausführungsbeispiel ist die Klappe in der Instrumententafel vorgesehen. Sie könnte aber ebensogut auch in der Türseitenverkleidung angeordnet sein, wenn dort der Airbag für Fahrer und/oder Beifahrer untergebracht wäre.

## Patentansprüche

1. Innenverkleidungsteil, insbesondere Instrumententafel für Kraftfahrzeuge, das aus einem mit einer schaumstoffbeschichteten Folie kaschierten Träger besteht, in dem eine Klappe für den Durchtritt eines Airbags bei dessen Auslösung versehen ist, die integral mit dem Träger ist und von der Folie überdeckt ist, die entlang der Ränder der Klappe eine eingeprägte Rille aufweist, **dadurch gekennzeichnet, daß** die die Klappe (5) auf einem Teil ihres Umfangs vom Träger (2) trennende Fuge (6) schmaler ist als 1,5 mm und daß die Folie (3) im Bereich der Fuge (6) geschwächt ist.

2. Innenverkleidungsteil nach Anspruch 1, **dadurch gekennzeichnet, daß** die Fuge (6) schmaler ist als 0,5 mm.

3. Innenverkleidungsteil nach Anspruch 2, **dadurch gekennzeichnet, daß** die Fuge (6) schmaler ist als 0,3 mm.

4. Innenverkleidungsteil nach Anspruch 1, **dadurch gekennzeichnet, daß** die Schnittebene der Fuge (6) unter einem Winkel von 90° zur Ebene des Innenverkleidungsteils liegt.

5. Innenverkleidungsteil nach Anspruch 4, **dadurch gekennzeichnet, daß** die Ebene der Fuge (6) unter einem Winkel < 90 °, vorzugsweise unter etwa 45°, liegt.

6. Innenverkleidungsteil nach einem der Ansprüche 1 bis 5, **dadurch gekennzeichnet, daß** der Träger (2) aus einem konturierten Preßling, überwiegend aus verpreßtem Faserstoff besteht.

7. Innenverkleidungsteil nach einem der Ansprüche 1 bis 6, **dadurch gekennzeichnet, daß** der Träger (2) mit der schaumstoffbeschichteten Folie (3) von 2 bis 3 mm Gesamtstärke verklebt ist.

8. Innenverkleidungsteil nach einem der Ansprüche 1 bis 7, **dadurch gekennzeichnet, daß** der Steg (7) zwischen Klappe (5) und Träger (2) durch einen aufgeklebten Streifen (8) aus flexiblem reißfestem Material verstärkt ist.

9. Innenverkleidungsteil nach Anspruch 1, **dadurch gekennzeichnet, daß** die Folie (3) entlang der Fuge (6) mit einer dickenreduzierten Rille versehen ist.

## Claims

1. An inner liner panel, more particularly a motor vehicle dashboard comprising a support which is lined with a foil coated with cellular material and which has for the emergence of an airbag on its release a flap integral with the support and covered by the foil, which has an impressed groove along the edges of the flap, characterized in that the joint (6) separating the flap (5) from the support (2) over a portion of its periphery is narrower than 1.5 mm and the foil (3) is weakened in the zone of the joint (6).

2. An inner liner panel according to claim 1, characterized in that the joint (6) is narrower than 0.5 mm.

3. An inner liner panel according to claim 2, characterized in that the joint (6) is narrower than 0.3 mm.

4. An inner liner panel according to claim 1, characterized in that the sectional plane of the joint (6) lies at an angle of 90° to the plane of the inner liner panel.

5. An inner liner panel according to claim 4, characterized in that the plane of the joint (6) lies at an angle < 90°, preferably below approximately 45°.

6. An inner liner panel according to one of claims 1 to 5, characterized in that the support (2) consists of a contoured pressing, mainly of pressed fibrous material.

7. An inner liner panel according to one of claims 1 to 6, characterized in that the foil (3) coated with cellular material is glued in a total thickness of 2 to 3 mm to the support (2).

8. An inner liner panel according to one of claims 1 to 7, characterized in that the strap (7) between the flap (5) and the support (2) is reinforced by a glued-on strip (8) of flexible tear-resistant material.

9. An inner liner panel according to claim 1, characterized in that the foil (3) has a groove of reduced thickness along the joint (6).

## Revendications

1. Elément de garniture intérieure, en particulier tableau d'instruments pour véhicules automobiles, qui est constitué d'un support laminé d'un film revêtu d'un matériau alvéolaire, dans lequel est prévu, pour le passage d'un coussin d'air lors de son déploiement, un volet qui fait partie intégrante du support et est revêtu du film, qui présente une rainure imprimée le long des bords du volet, caractérisé en ce que l'interstice (6) séparant le volet (5), sur une partie de sa périphérie, du support (2) est plus étroit que 1,5 mm et en ce que le film (3) est affaibli dans la zone de l'interstice (6).

2. Elément de garniture intérieure selon la revendication 1, caractérisé en ce que l'interstice (6) est plus étroit que 0,5 mm.

3. Elément de garniture intérieure selon la revendication 2, caractérisé en ce que l'interstice (6) est plus étroit que 0,3 mm.

4. Elément de garniture intérieure selon la revendication 1, caractérisé en ce que le plan de coupe de l'interstice (6) fait un angle de 90° avec le plan de l'élément de garniture intérieure.

5. Elément de garniture intérieure selon la revendication 4, caractérisé en ce que le plan de l'interstice (6) fait un angle inférieur à 90°, de préférence inférieur à environ 45°.

6. Elément de garniture intérieure selon l'une quelconque des revendications 1 à 5, caractérisé en ce que le support (2) est constitué d'une pièce moulée, principalement d'un matériau fibreux moulé.

7. Elément de garniture intérieure selon l'une quelconque des revendications 1 à 6, caractérisé en ce que le support (2) est collé au film (3) revêtu de matériau alvéolaire d'une épaisseur totale de 2 à 3 mm.

8. Elément de garniture intérieure selon l'une quelconque des revendications 1 à 7, caractérisé en ce que le pont de matière (7) situé entre le volet (5) et le support (2) est renforcé par une bande collée (8) constituée d'un matériau souple résistant à la déchirure.

9. Elément de garniture intérieure selon la revendication 1, caractérisé en ce que le film (3) est pourvu, le long de l'interstice (6), d'une rainure réduisant l'épaisseur.
